# EUROPEAN PATENT SPECIFICATION

(11) **EP 3 599 687 B1**
(45) Date of publication and mention of the grant of the patent: **04.09.2024**
(21) Application number: 19187969.1
(22) Date of filing: 24.07.2019
(51) Int. Cl.: H02G 3/12, H04L 12/28, H02G 3/14, H02G 3/18, H01H 23/00, H02J 13/00

(54) **MODULAR CONTROL DEVICE**
MODULARE STEUERUNGSVORRICHTUNG
DISPOSITIF DE COMMANDE MODULAIRE

(30) Priority: 24.07.2018 BE 201805531
(43) Date of publication of application: 29.01.2020
(73) Proprietor: Niko NV, 9100 Sint-Niklaas (BE)
(72) Inventor: VAN OVERLOOP, Isabelle, 9032 Wondelgem (BE); THIERENS, Jan, 9100 Sint-Niklaas (BE); SALDIEN, Jelle, 9000 Gent (BE); DE RUYCK, Olivia, 9000 Gent (BE)
(74) Representative: Winger

(56) References cited:
- EP-A1- 0 452 658
- EP-A1- 2 645 501
- EP-A2- 0 344 609
- EP-A2- 1 993 180
- EP-A2- 2 043 123
- DE-A1- 19 943 570
- US-A1- 2015 061 387
- US-B1- 9 940 884

## Description

### Technical field of the invention

The present invention relates to control devices such as e.g. regular light switches, smart switches or home control interfaces. More particularly, the present invention relates to a modular control device comprising a base module to which easily functionality can be added by means of easily fixable, removable, interchangeable and re-fixable functional extension modules, lij

### Background of the invention

Sensor are devices or systems whose purpose is to detect events or changes in their environment and send the information to a remote device, such as e.g. an electric or electronic device, but also a computer, a tablet, a smart phone, a gateway of a home automation system, or the like. A sensor is always used with other electronics, whether as simple as a light or as complex as a computer. The use of sensors in our homes is not new. Sensors have been used for some time now, e.g. in combination with alarm systems and/or for presence detection. However, nowadays sensors become more and more important to make our homes more smart. Many sensors for use in houses are available on the market, such as e.g. temperature sensors, acoustic sensors, VOC sensors, CO₂ sensors.

Sensors can be used as standalone devices but can also be incorporated in a home automation system. In a home automation system, the sensors are typically connected to a central hub or gateway to control electric or electronic devices, such as e.g. an HVAC system, blinds, lighting systems.

A disadvantage of using sensors in home is that such sensors only have a limited life cycle. Further, sensor technology also rapidly evolves. Therefore, sensors need to be changed or replaced quite often. In current sensor systems, the whole system needs to be replaced, which is time consuming and expensive. Moreover, in a lot of cases a user can not do this him- or herself, but needs to ask for the help of an installer, which again increases the cost. The document EP 0 452 658 A describes modular control device according to the preamble of claim 1. A similar control device is disclosed in the publication US 2015/061387 A1.

### Summary of the invention

It is an object of embodiments of the present invention to provide a modular control device for controlling electric or electronic devices, to which new functionalities can easily be added or removed.

The above objective is accomplished by a device according to claim 1.

The present invention provides a modular control device. The modular control device comprises a base module adapted for being mounted on a wall or a ceiling and at least one functional extension module adapted for being removably connected to the base module via a connection interface. The connection interface allows current to be provided from the base module to the at least one functional extension module. The modular control device furthermore comprises means for sending information a remote device such as e.g. a mobile phone, a tablet or a computer.

An advantage of a modular device according to embodiments of the invention is that it facilitates the replacement of one or more functional extension modules, whenever this would be necessary because of the need for new or other functional extension modules or because of the failure of the present functional modules. The replacement of the one or more functional extension modules can be done by the user him- or herself and does not need the interference of an installer. This makes it much cheaper than existing systems and devices, as only the relevant functional extension module needs to be replaced and not the complete system or device.

According to the invention, the base module comprises a mounting box for being mounted in a wall. A device identification such as e.g. a MAC address of the base module is located in the mounting box.

The modular control device may, according to embodiments of the invention, be adapted for controlling an electric or electronic device, such as e.g. a lighting device, an HVAC system, blinds, or the like. Therefore, the means for sending information of the modular control device may further be adapted to send information from the at least one functional extension module to the at least one electric or electronic device, i.e. for activating and/or controlling the at least one electric or electronic device.

The connection interface is adapted for allowing data to be exchanged between the base module and the at least one functional extension module.

According to particular embodiments, the modular control device may be a standalone device. According so such embodiments, the base module may, for example, be a regular light switch or a smart switch. The connection interface may comprises an extension board with at least two extension board parts. A modular control device according to claim 7, the connection board comprising a plurality of extension board parts, wherein the plurality of extension board parts are mechanically and electrically interconnected.

The modular control device may further comprise a cover plate adapted for being removably connected to the extension board and for carrying the base module and the at least one functional extension module. The at least one functional extension module may be adapted for being removably connected to the cover plate by means of, for example, snaps, magnets, USB-C or the like.

According to further embodiments, the modular control device may be part of a home automation system. According to such embodiments, the base module may comprise a home automation system interface such as e.g. a display, gateway, interconnection box or the like. According to embodiments of the invention, the home automation system interface may comprise at least one recess and the at least one functional extension module may comprise at least one protrusion mechanically fitting the at least one recess in the home automation system interface, the home automation system interface being adapted for exchanging power and data between the functional extension module and the base module.

According to further embodiments, the home automation system interface may comprise at least one protrusion and the at least one functional extension module may comprise at least one recess for receiving the at least one protrusion of the home automation system interface, the home automation system interface being adapted for exchanging power and data between the functional extension module and the base module.

According to still further embodiments, the at least one protrusion may be hidden in the home automation system interface such that, when removably fixing the at least one functional extension module to the home automation system interface, the at least one functional extension module is at least partially sunk in the home automation system interface. According to still further embodiments, a breadboard may be formed in at least part of the home automation interface, the breadboard comprising perforations in which small protrusions on the at least one functional extension module fit

An advantage hereof is that the perforations in the breadboard can also serve as ventilation for cooling down the different components of the modular control device.

According to embodiments of the invention, the connection interface may be a USB port.

The at least one functional extension module may comprise at least one of a sensor module, a USB hub, a USB charger, a USB powerbank, a WiFi repeater, an intercom module , a babyphone module, or the like.

### Brief description of the drawings

It has to be noted that same reference signs in the different figures refer to same, similar or analogous elements.
Figs. 1A and 1B schematically illustrate a modular control device according to an embodiment of a first implementation of the invention.
Fig. 2 schematically illustrates an example of an extension board that can be used in a modular control device according to embodiments of the first implementation of the invention.
Figs. 3A to 3C schematically illustrate a modular control device according to an embodiment of a second implementation of the invention.
Fig. 4 schematically illustrate a modular control device according to an embodiment of a second implementation of the invention.
Figs. 5A to 5D schematically illustrate a modular control device according to an embodiment of a second implementation of the invention.
Figs. 6A to 6C schematically illustrate a modular control device according to an embodiment of a second implementation of the invention.
Figs. 7A and 7B schematically illustrate a modular control device according to an embodiment of a second implementation of the invention.
Figs. 8A and 8B schematically illustrate a modular control device according to an embodiment of a second implementation of the invention.
Figs. 9A and 9B schematically illustrate part of the extension board with a functional extension module according to an embodiment of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a modular control device a base module adapted for being mounted on a wall or a ceiling, and at least one functional extension module adapted for being removably connected to the base module via a connection interface, the connection interface allowing current to be provided from the base module to the at least one functional extension module. The modular control device furthermore comprises means for sending information to a remote device, such as e.g. a mobile phone, a tablet or a computer. With functional extension module is meant a module for being added to the base module to add a functionality to the control device.

An advantage of a modular control device according to embodiments of the invention is that it facilitates the replacement of one or more functional extension modules, whenever this would be necessary because of the need for new or other functional extension modules or because of the failure of the present functional modules. The replacement of the one or more functional extension modules can be done by the user him- or herself and does not need the interference of an installer. Further, the at least one functional extension module is not integrated in the modular control device, but remains a module separated from the control device. The at least one functional extension module is watertight, and can function on its own. Because of that, replacing one or more functional extension modules can be done by simply removing the current functional extension module and providing the new functional extension module. Power supply to the modular control device does not have to be interrupted for the interchange, removal or addition of a functional extension module, or in other words, the modular control device is such that the at least one functional extension module is hot-pluggable. Further, no other parts of the modular control devices have to be removed when replacing, adding or removing a functional extension module.

The fact that the functional extension modules can easily be interchanged, removed or added, makes a modular control device according to embodiments of the invention much cheaper than existing systems and devices, as only the relevant functional extension module needs to be replaced and not the complete system or device.

The present invention will hereinafter be described by means of different embodiments. It has to be understood that these embodiments are only for the ease of understanding the invention and are not intended to limit the invention in any way.

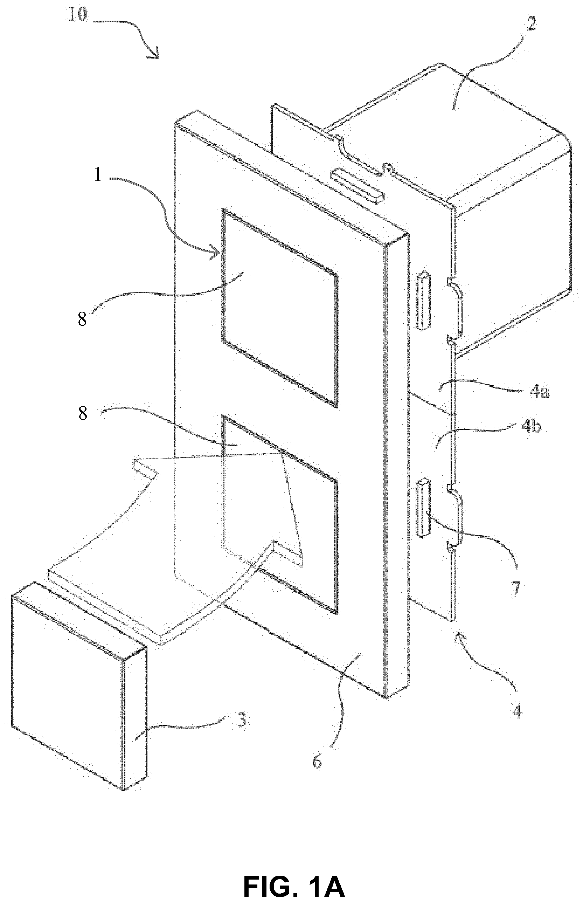

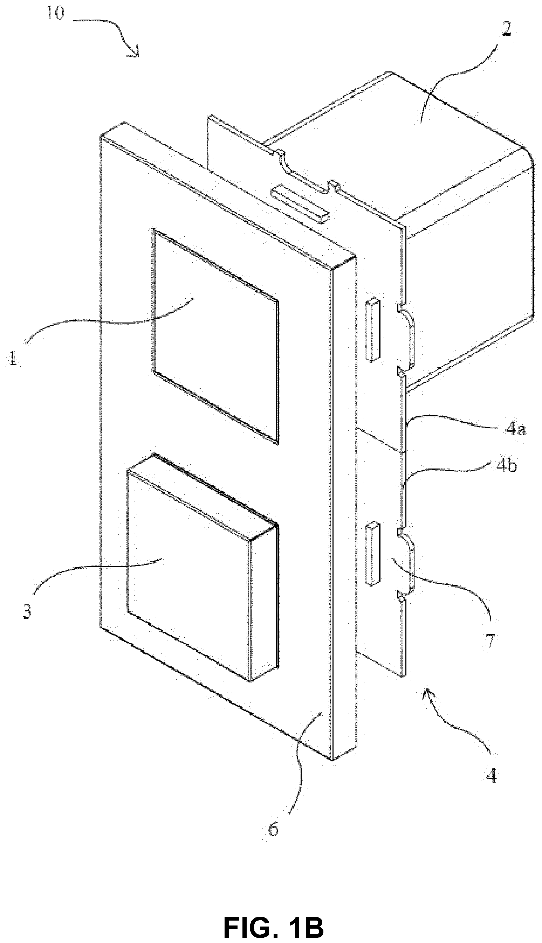

Figs. 1A and 1B schematically illustrate embodiments of a first implementation of a modular control device 10 according to the invention. The modular control device 10 is intended for being mounted on a wall or on a ceiling.

According to this first implementation, the modular control device 10 may be a standalone device. With standalone device is meant a device that is not part of a further system, such as for example a home automation system, and which can function fully independently.

The modular control device 10 comprises a base module 1. The base module 1 may, for example, be a regular switch or a smart switch. According to a first embodiment of the first implementation, but not limited thereto, the base module 1 may be a switch. The switch 1 comprises a mounting box 2 for being placed in the wall or ceiling and housing the required electronics of the switch, smart switch or base module 1 in general. Also, in this mounting box 2 the device identification of the base module 1 is present. This couples the base module 1, and thus the modular control device 10, to a particular location.

The modular control device 10 furthermore comprises at least one functional extension module 3. With functional extension module 3 is meant a module for being added to the base module 1 to add a functionality to the control device 10. The functional extension module 3 can be any suitable functional extension module 3 as known by a person skilled in the art such as, for example but not limited to, a switch, a sensor module, a USB hub, a USB charger, a USB powerbank, a WiFi repeater, an intercom module, or the like. In case of a sensor module, the senor module can comprise any suitable sensor device known by a person skilled in the art, such as for example but not limited to a VOC sensor, a CO2 sensor, a temperature sensor, an acoustic sensor, a relative humidity sensor or the like.

The at least one functional extension module 3 is adapted for being removably connected to the base module 1 via a connection interface 4. This connection should in all cases both be mechanical and electrical, and allows current to be provided to the at least one functional extension module 3. The connection interface 4 is further adapted to allow data to be exchanged between the base module 1 and the at least one functional extension module 3. In the example given, the connection interface may comprise an extension board 4. Further, the extension board 4 provides place for the at least one functional extension module 3 and the base module 1. The extension board 4 may be fixed to the mounting box 2 in any suitable way as known by a person skilled in the art, such as e.g. by standard screws, or by a snap mechanism, or by a hook or clamp mechanism that is tightened with a screw onto the mounting box 2.

The modular control device 10 furthermore comprises a cover plate 6 to finish it off. The cover plate 6 may be clicked onto the extension board 4 by means of any suitable click system. For example, the click system may comprise snaps 7 on the extension board 4 that can be snapped into recesses on the back of the cover plate 6 (not shown). However, any other suitable fixing mechanism known by a person skilled in the art may be used. Important is that the cover plate 6 is removably connected to the extension board 4, so that it can be removed at any time, for example, when additional functional extension modules 3 have to be added and another cover plate 6 is required. The cover plate 6 may comprise as many openings 8 as required by the number of functional extension modules 3 present.

The functional extension module 3 can be provided onto the cover plate 6 in different ways. According to embodiments of the invention, the functional extension module 3 may be removably connected by e.g. a snap mechanism, magnets, or any other suitable connection as known by a person skilled in the art, e.g. special connector ... Important to note is that the functional module 3 can be removably connected either to the cover plate 6 or directly onto the connection interface, in the example given to the extension board 4, and that the formed connection between the at least one functional extension module 3 and the base module 1 is both electrical and mechanical.

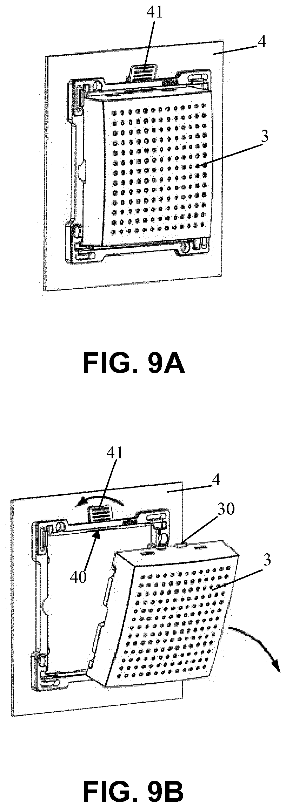

For example, the at least one functional extension module 3 can be connected to the extension board 4 by means of a snap connection. This is illustrated in Figs. 9A and 9B, which schematically illustrate part of the extension board 4 with a functional extension module 3. Therefore, the at least one functional module 3 may comprise snap hooks 30 which grip behind an edge 40 of the extension board 4. A small lip 41 may be provided on the extension board. By pushing back the small lip 41, the extension board 4 is twisted backwards and the functional extension module 3 is thereby released.

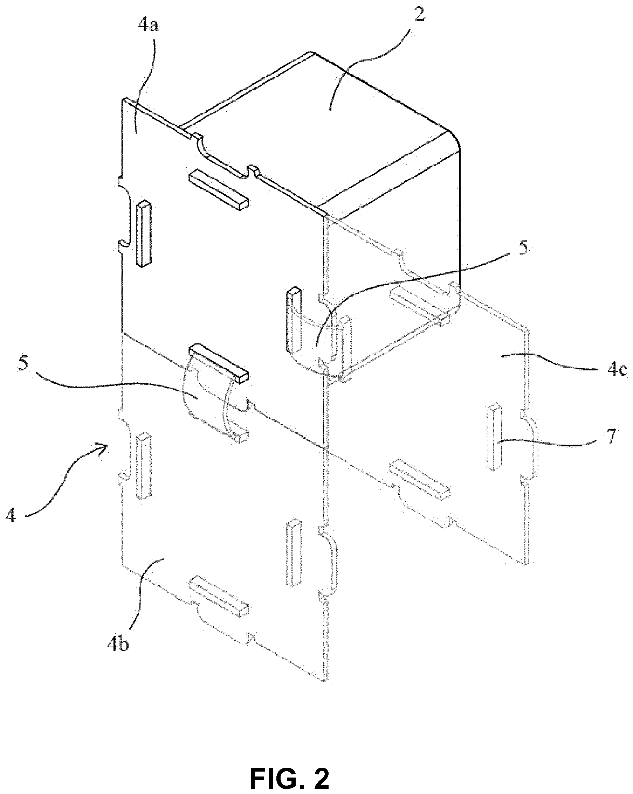

In its most simple shape, the extension board 4 may have two extension board parts 4a, 4b, one extension board part 4a for the base module 1 and one extension board part 4b for the functional extension module 3. However, according to embodiments of the invention, the extension board 4 may have any suitable number of extension board parts 4a, 4b, 4c, ... as required for a particular user. An example is illustrated in Fig. 2. The different parts 4a, 4b, 4c, ... can be mechanically connected, e.g. clicked together, in a way similar to pieces of a puzzle, as can be seen from the figures. The different extension board parts 4a, 4b, 4c, ... are further electrically connected. Therefore electrical connection 5 extend from one extension board part to another. Extension board parts 4a, 4b, 4c, ... can be connected together in both horizontal and vertical directions.

The modular control device 10 furthermore comprises means for sending information to a remote device, such as e.g. a smart phone, a tablet, a computer or a gateway. For example, when the functional extension module 3 is a temperature or humidity sensor, the sensed value may be sent to, for example, a smart phone so that a user can see if, e.g. air conditioning should be activated. Still further, these sensed values may be sent to a remote gateway, which then can activate the air conditioning so as to optimise the values of temperature and/or humidity. So, in general, information can be sent to a remote device so as to allow a user or an electric or electronic device to take action.

According to still further embodiments, the means for sending information may be further adapted to directly send information to an electric or electronic device, such as a lighting device, blinds, an HVAC system or the like, so as to activate and/or control these electric or electronic devices.

A modular control device 10 according to the first implementation can be provided in existing homes. In such cases, a regular switch can be replaced by a modular control device 10 according to embodiments of the first implementation of the invention. Or in other words, an existing light switch or smart switch can be extended with additional functionalities by means of adding functional extension modules 3. To make the existing switch or smart switch extendable, the existing internal electronics should be replaced once by suitable electronics. This may preferably be done by an installer. The new electronics then allow to add the extension board for providing current to the functional extension module 3 and for allowing data exchange between the base module 1 and the functional extension module 3. As the device identification is, as already mentioned above, is located in the mounting box 2 of the base module 1, once this base module 1 is installed, the location of the modular control device 10 is fixed. That means that, whenever a functional extension module 3 is added to the base module 1, this functional extension module 3 is automatically linked to that specific location of the modular control device, because of the connection interface 4 that allows current and data to be exchanged between the base module 1 and the at least one functional extension module 4. An advantage of a modular control device 10 according to the first implementation is that functional extension module 3 can easily be fixed to and removed from the base module 1 over and over again. This makes it very easy to remove a functional extension module 3 when it doesn't work anymore or whenever a new functionality is required. Moreover, the functional extension modules 3 are interchangeable between base modules 1 located in different rooms or at different locations within a room. In other words, each room or each location within a room has to be provided with a base module 1. And from then on, functional extension modules 3 can be changed from one base module 1 to the other, depending on the needs of a user. Because the device identification of the base module 1 is located in the mounting box 2 of the base module 1, whenever a new functional extension module 3 is fixed to the base module 1 at whatever location, that new functional extension module 3 is automatically added to that location.

Further, whenever new extension modules 3 with new functionalities become available on the market, only such new functional extension module 3 has to be bought and it can directly be used with the present base modules 1 in the house.

Because no electronics have to be touched, as adding a new functional extension module 3 to a base module 1 only requires fixing, e.g. clicking, the new functional extension module 3 to the base module 1, also no intervening of an installer is required and this can all be done by the user him- or herself.

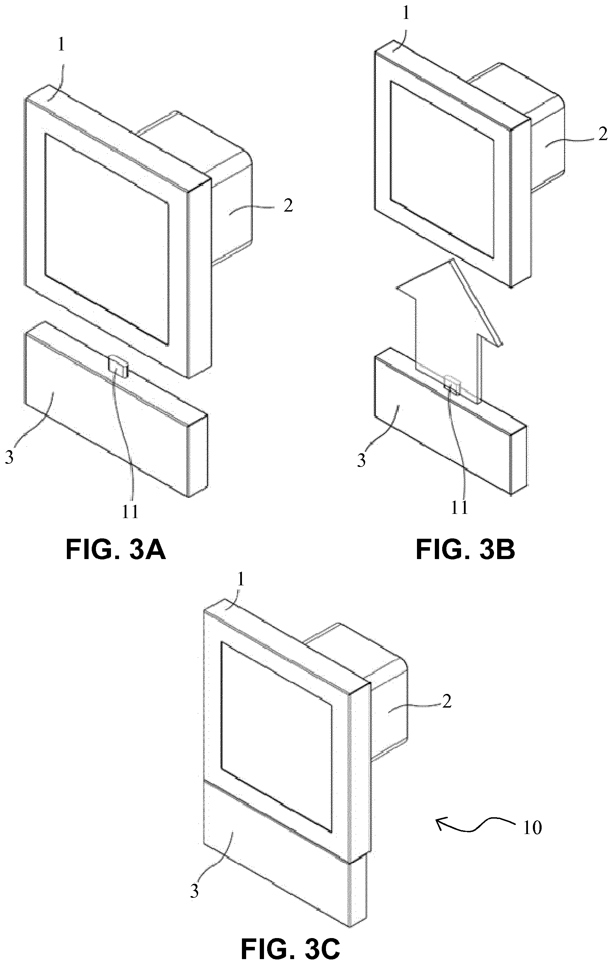

Figs. 3 to 7 schematically illustrate embodiments of a second implementation of a modular control device 10 according to the invention. The modular control device 10 according to these embodiments is preferably intended for being mounted on a wall. According to this second implementation, the modular control device 10 may be part of a home automation system.

The modular control device 10 comprises a base module 1, which may, for example, comprise a home automation system interface 1 such as e.g. a display or the like. The base module 1 comprises a mounting box 2 for mounting in the wall and comprising electronics for driving the modular control device 10. Similar as for the embodiments described above, the device identification is present in the mounting box 2 of the base module 1.

Further, the modular control device 10 also comprises at least one functional extension module 3. With functional extension module 3 is meant a module for being added to the base module 1 to add a functionality to the control device 10. The at least one functional extension module 3 can be any suitable functional extension module 3 as known by a person skilled in the art such as, for example but not limited to, a sensor module, a USB hub, a USB charger, a USB powerbank, a WiFi repeater, an intercom module, a babyphone module or the like. In case of a sensor module, the senor module can comprise any suitable sensor device known by a person skilled in the art, such as for example but not limited to a VOC sensor, a CO2 sensor, a temperature sensor, an acoustic sensor, a relative humidity sensor or the like.

Hereinafter, different embodiments of the second implementation will be discussed.

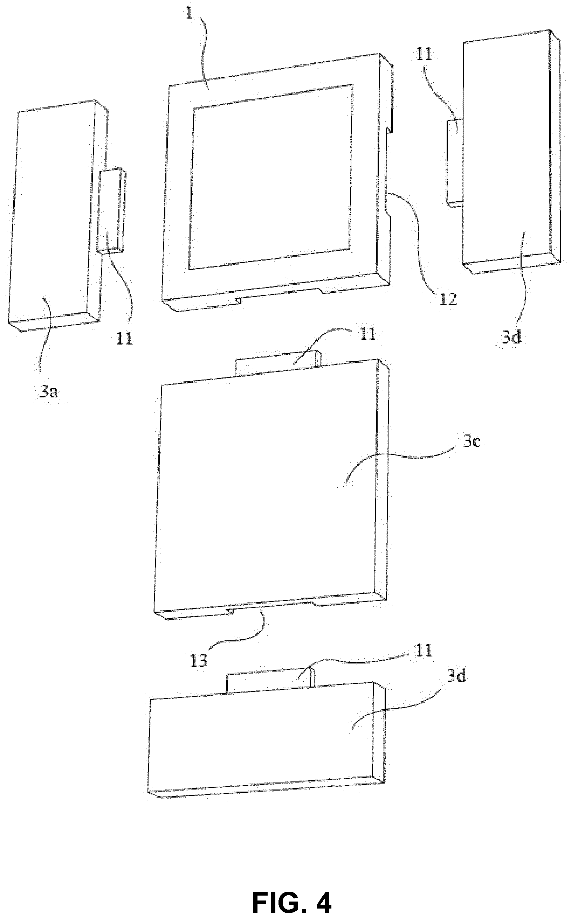

Figs. 3A to 3C schematically illustrate a first embodiment of the second implementation. The modular control device 10 comprises a base module 1, in the example given a display 1, and at least one functional extension module 3. The display 1 may comprise a mounting box 2 for being placed in the wall and for housing the required electronics of the display or the home automation system interface 1 in general. The display 1 may comprise a recess (not shown in Figs. 4A to 4C) and the functional extension module 3 may comprise a protrusion 11 that fits into the recess of the display 1 for removably fixing the functional extension module 3 to the base module 1. For aesthetical reasons, the at least one functional extension module 3 may preferably but not necessarily have a rectangular shape with a length equal to the width of the display 1. In that way, when the functional extension module 3 is fixed onto the display 1, the shape of the modular control device 10 is a rectangle or a square. It has to be noted that, although in the example given in Fig. 3A to 3C, one functional extension module 3 is provided at a lower side of the display 1, this is not intended to limit the invention in any way. Functional extension modules can also be provided at all other sides of the display 1 and also a functional extension module 3 can be provided at more than one side of the display 1 a the same time.

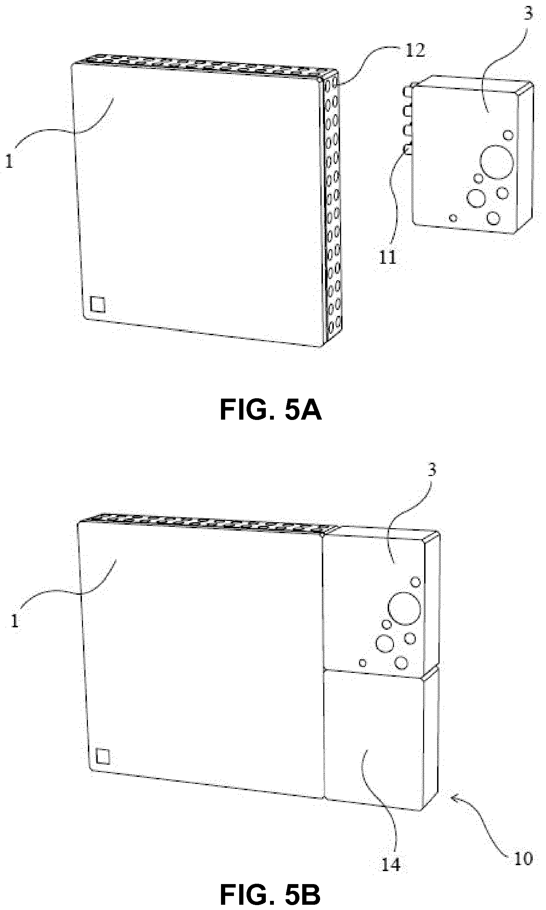

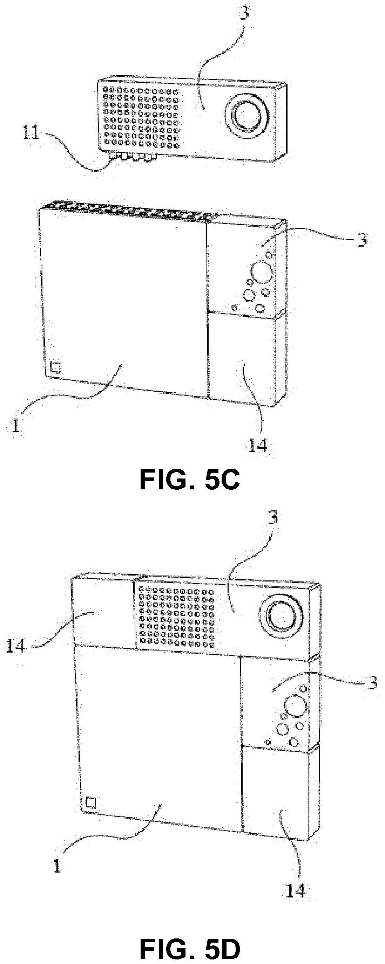

According to a further embodiment of the second implementation, which is illustrated in Fig. 4, the modular control device 10 may comprise a base module 1 and a plurality of functional extension modules 3, in the example given four. As can be seen in Fig. 5 there are three functional extension modules 3a, 3b, 3c that are directly connected or fixed to the base module 1 via protrusions 11 on the functional extension modules 3a, 3b, 3c. and recesses 12 in the bases module 1. Another functional extension module 3d may indirectly be connected to the base module 1, via connection to another functional extension module 3c. This increases the number of functional extension modules 3 that can be added to one base module 1. For the purpose of fixing the fourth functional extension module 3d, functional extension module 3c may additionally comprise a recess 13 for receiving the protrusion 11 of functional extension module 3d.

In Fig. 5A to 5D, a further embodiment is illustrated, in which the functional extension modules 3 have the shape of blocks, which have a plurality of small protrusions 11 that fit into small recesses 12 in the base module 1. For aesthetic reasons, dummy or filler pieces 14 may be provided such that the modular control device 10 has a nice rectangular or square shape in case there are not enough functional extension modules 3 fixed to the base module 1 to obtain such nice rectangular or square shape.

As can be seen from Figs. 4A to 4C, Fig. 5 and Fig. 6 the shape and size of the protrusions 11 and the recesses 12 can differ from embodiment to embodiment. This size and shape can, according to embodiments of the invention, depend on the kind of functional extension device but the protrusions 11 and recesses 12 can have any suitable shape and size. However, according to the invention, only one requirement has to be met and that is that the protrusions and recesses should be such that they provide both a mechanical and an electrical connection between the at least one functional extension module 3 and the base module 1.

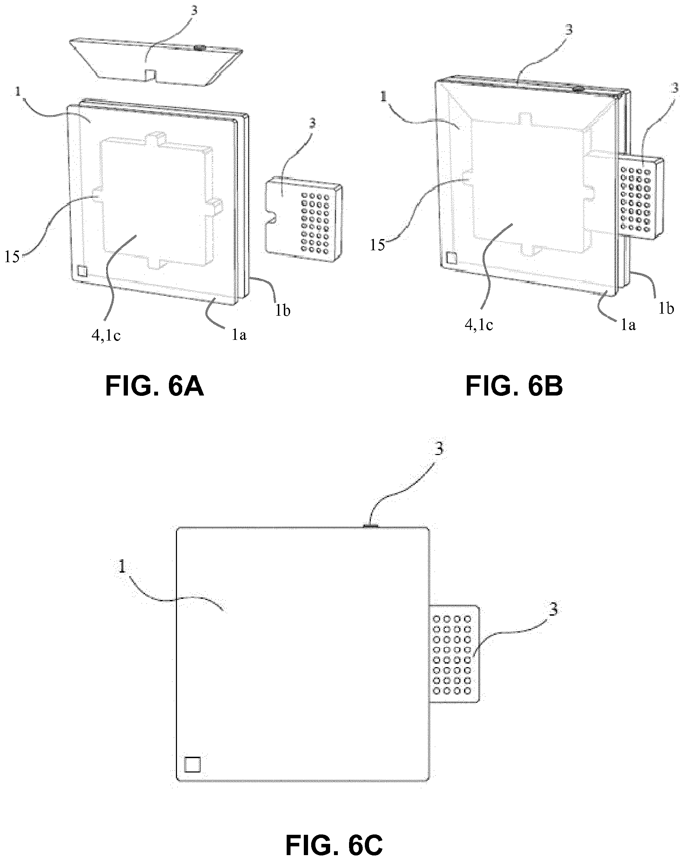

A further embodiment of the second implementation is illustrated in Fig. 6A to 6C. According to these embodiments, the base module 1 may be configured to have a front side 1a and a back side 1b in between which the connection interface 4 is formed by kind of a connector block 1c that is part of the base module 1. The connector block 1c may have any suitable shape but has at least one protrusion 11 which are hidden in the base module 1. The at least one functional extension module 3 may then comprise a recess 13 for fitting the protrusion 11 on the connector block 1c in the base module 1. The hidden protrusions 11 may be such that, when the functional extension module(s) 3 is/are removably connected to the base module 1, the functional extension module(s) 3 is/are at least partially sunk in the base module 1. According to embodiments of the invention, the at least one functional extension module 3 may be fully hidden in the base module 1. Preferably, all functional extension modules 3 are provided such that they are fully hidden in the base module 1. However, in some cases and depending on the type of functional extension modules 3 used, e.g. when more ventilation is required because the functional extension module 3 comprises components that heat up during use, or whenever access to a functional extension module 3 is required, at least part of the functional extension module 3 may come out of the base module 1 so as to ease cooling of the components or to make access to the functional extension module 3 possible.

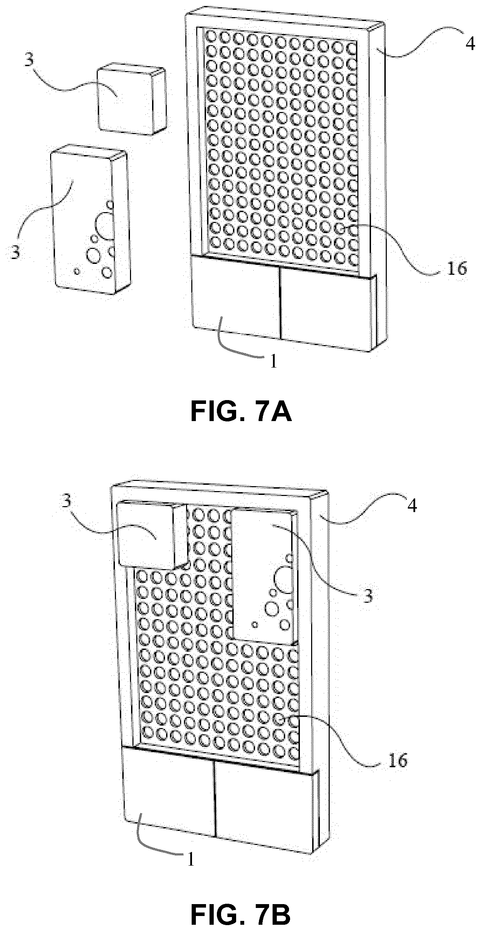

Still another embodiment of the second implementation is illustrated in Fig. 7A and 7B. According to this embodiment, a breadboard 16 may be formed onto the base module 1 onto which the functional extension modules 3 can be removably connected. Therefore, the functional extension modules 3 may be provided with protrusions (not shown in the figure) for fitting into the small recesses 12 provided in the breadboard 16. Base module functionalities can be present at e.g. the lower part of the breadboard 16. This may, for example, be physical buttons of, for example, a light switch.

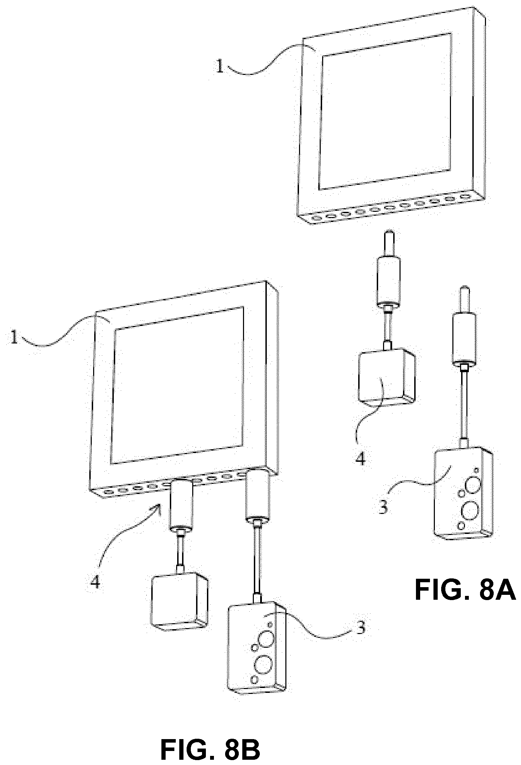

Fig. 8 illustrates a further embodiment that can be used in the first implementation as well as in the second implementation described above. According to this embodiment, the connection interface 4 may be formed by a USB port on the base module 1. The functional extension module 3 then comprises a USB socket to be able to connect to the USB port 4 on the base module 1. In all of the above described embodiments, information collected from the functional extension modules is sent to the electric or electronic device, such as lighting means, blinds, an alarm system, a HVAC system, or the like. Information can further be sent to a remote device such as, for example, a computer, a mobile phone, a display, a gateway of a home automation system or the like.

Modular control devices 10 according embodiments of the second implementation are preferably, but not limited to, used in new built houses. The user makes the choice to provide base modules 1 throughout the house. Whenever, at any time, the user wants to add functionalities, this can be done by simply connecting the required functional extension modules 3 to the base module 1. The connection with the electronics of the base module 1 through the connection interface 4 provides current to the functional extension module 3 and allows communicating with the home automation system (e.g. central control of data, output for example via an app on a smartphone or tablet). After first installation, whenever required, one or more functional extension modules 3 can be removed from the base module 1 and can be fixed to another base module 1 in another room or at another location in the same room. Fixing and removing a functional extension module is very easy, and can be done fast, e.g. when the functional extension module 3 doesn't work anymore or whenever a new functionality is required. Moreover, the functional extension modules are interchangeable between base modules located in different rooms or at different locations within a room. In other words, each room or each location within a room has to be provided with a base module. And from then on, functional extension modules can be changed from one base module to the other, depending on the needs of a user.

Further, whenever new extension modules with new functionalities become available on the market, only such new functional extension module has to be bought and it can directly be used with the present base modules in the house.

According to all embodiments of the invention described above, any suitable number of functional extension modules 3 can be fixed to the base module 1 as required by a user. According to embodiments of the invention, the functional extension modules 3 provided to the base module 1 can all be same functional extension modules 3 or can all be different functional extension modules 3. Any mix of same and different functional extension modules 3 is also possible.

The modular control device 10 furthermore comprises means for sending information to a remote device, such as e.g. a smart phone, a tablet, a computer or a gateway. For example, when the functional extension module 3 is a temperature or humidity sensor, the sensed value may be sent to, for example, a smart phone so that a user can see if, e.g. air conditioning should be activated. Still further, these sensed values may be sent to a remote gateway, which then can activate the air conditioning so as to optimise the values of temperature and/or humidity. So, in general, information can be sent to a remote device so as to allow a user or an electric or electronic device to take action.

According to still further embodiments, the means for sending information may be further adapted to directly send information to an electric or electronic device, such as a lighting device, blinds, an HVAC system or the like, so as to activate and/or control these electric or electronic devices.

A big advantage of a modular control device 10 according to embodiments of the invention is that a user can start with a simple base module 1 and can add, interchange, remove, re-add, ... functional extension modules 3 at any time and whenever required. This means that a user can start with a rather cheap system and can extend that system at its own tempo. It is further also possible to use temporary connected functional modules, such as e.g. power banks. They can be removed when needed and be fixed to the base module 1 again after use.

## Claims

1. A modular control device (10) comprising:
- a base module (1) adapted for being mounted on a wall or a ceiling,
- at least one functional extension module (3) adapted for being removably connected to the base module (1) via a connection interface (4) to add a functionality to the modular control device (10), and
- means for sending information to a remote device,
**characterised in that**
- the base module (1) comprises a mounting box (2) for being mounted in a wall, wherein a device identification of the base module (1) is located in the mounting box (2) and wherein the device identification is adapted to couple the modular control device (10) to a particular location, and
- the connection interface (4) is adapted for allowing current to be provided from the base module (1) to the at least one functional extension module (3) and allows data to be exchanged between the base module (1) and the at least one functional extension module (3), for automatically linking the functional extension module (3) to that specific location of the modular control device (10).

2. A modular control device (10) according to claim 1, wherein the means for sending information is further adapted to send information from the at least one functional extension module (3) to at least one electric or electronic device so as to activate and/or control the at least one electric or electronic device.

3. A modular control device (10) according to any of the previous claims, wherein the modular control device (10) is a standalone device.

4. A modular control device (10) according to claim 3, wherein the connection interface (4) comprises an extension board with at least two extension board parts (4a, 4b, 4c).

5. A modular control device (10) according to claim 4, the connection board (4) comprising a plurality of extension board parts (4a, 4b, 4c), wherein the plurality of extension board parts (4a, 4b, 4c) are mechanically and electrically interconnected.

6. A modular control device (10) according to claim 4 or 5, further comprising a cover plate (6) adapted for being removably connected to the extension board (4) and for carrying the base module (1) and the at least one functional extension module (3).

7. A modular control device (10) according to claim 6, wherein the at least one functional extension module (3) is adapted for being removably connected to the cover plate (6).

8. A modular control device (10) according to any of claims 1 or 2, wherein the modular control device (10) is part of a home automation system.

9. A modular control device (10) according to claim 8, wherein the base module (1) comprises a home automation system interface.

10. A modular control device (10) according to claim 9, the home automation system interface (1) comprising at least one recess (12) and the at least one functional extension module (3) comprising at least one protrusion (11) mechanically fitting the at least one recess (13) in the home automation system interface (1)

11. A modular control device (10) according to claim 9, the home automation system interface (1) comprising at least one protrusion (15) and the at least one functional extension module (3) comprising at least one recess (13) for receiving the at least one protrusion (15) of the home automation system interface (1).

12. A modular control device (10) according to claim 11, wherein the at least one protrusion (15) is hidden in the home automation system interface (1) such that, when removably fixing the at least one functional extension module (3) to the home automation system interface (1), the at least one functional extension module (3) is at least partially sunk in the home automation system interface (1).

13. A modular control device (10) according to claim 9, wherein a breadboard (16) is formed in at least part of the home automation interface (1), the breadboard (16) comprising perforations in which small protrusions (11) on the at least one functional extension module (3) fit.

14. A modular control device (10) according to any of the previous claims, wherein the at least one functional extension module (3) comprises at least one of a switch, a sensor module, a USB hub, a USB charger, a USB power bank, a WiFi repeater, an intercom module, a babyphone module or the like.

15. A modular control device (10) according to any claims 2 to 14, wherein electric or electronic device to be activated or controlled by the modular control device (10) is a lighting device, an HVAC system, blinds or the like.

16. A modular control device (10) according to any of the previous claims, wherein the base module (1) is a switch, a smart switch, a display, or the like.

## Patentansprüche

1. Modulare Steuervorrichtung (10), umfassend:
- ein Basismodul (1), das zum Montieren an eine Wand oder Decke angepasst ist,
- mindestens ein Funktionserweiterungsmodul (3), das zum abnehmbar Verbinden mit dem Basismodul (1) über eine Verbindungsschnittstelle (4) angepasst ist, um der modularen Steuervorrichtung (10) eine Funktionalität hinzuzufügen, und
- Mittel zum Senden von Informationen an eine entfernte Vorrichtung,
**dadurch gekennzeichnet, dass**
- das Basismodul (1) einen Montagekasten (2) zum Montieren in eine Wand umfasst, wobei sich eine Vorrichtungskennung des Basismoduls (1) in dem Montagekasten (2) befindet, und wobei die Vorrichtungskennung angepasst ist, um die modulare Steuervorrichtung (10) an einen bestimmten Ort zu koppeln, und
- die Verbindungsschnittstelle (4) zum Ermöglichen angepasst ist, dass Strom von dem Basismodul (1) an das mindestens eine Funktionserweiterungsmodul (3) bereitgestellt wird, und ermöglicht, dass Daten zwischen dem Basismodul (1) und dem mindestens einen Funktionserweiterungsmodul (3) zum automatischen Verknüpfen des Funktionserweiterungsmoduls (3) mit dem spezifischen Ort der modularen Steuervorrichtung (10) ausgetauscht werden.

2. Modulare Steuervorrichtung (10) nach Anspruch 1, wobei die Mittel zum Senden von Informationen ferner angepasst sind, um Informationen von dem mindestens einen Funktionserweiterungsmodul (3) an mindestens eine elektrische oder elektronische Vorrichtung zu senden, um die mindestens eine elektrische oder elektronische Vorrichtung zu aktivieren und/oder zu steuern.

3. Modulare Steuervorrichtung (10) nach einem der vorstehenden Ansprüche, wobei die modulare Steuervorrichtung (10) eine eigenständige Vorrichtung ist.

4. Modulare Steuervorrichtung (10) nach Anspruch 3, wobei die Verbindungsschnittstelle (4) eine Erweiterungsplatine mit mindestens zwei Erweiterungsplatinenteilen (4a, 4b, 4c) umfasst.

5. Modulare Steuervorrichtung (10) nach Anspruch 4, die Verbindungsplatine (4) umfassend eine Vielzahl von Erweiterungsplatinenteilen (4a, 4b, 4c), wobei die Vielzahl von Erweiterungsplatinenteilen (4a, 4b, 4c) mechanisch und elektrisch miteinander verbunden sind.

6. Modulare Steuervorrichtung (10) nach Anspruch 4 oder 5, ferner umfassend eine Abdeckplatte (6), die zum abnehmbar Verbinden mit der Erweiterungsplatine (4) und zum Tragen des Basismoduls (1) und des mindestens einen Funktionserweiterungsmoduls (3) angepasst ist.

7. Modulare Steuervorrichtung (10) nach Anspruch 6, wobei das mindestens eine Funktionserweiterungsmodul (3) zum abnehmbar Verbinden mit der Abdeckplatte (6) angepasst ist.

8. Modulare Steuervorrichtung (10) nach einem der Ansprüche 1 oder 2, wobei die modulare Steuervorrichtung (10) Teil eines Hausautomationssystems ist.

9. Modulare Steuervorrichtung (10) nach Anspruch 8, wobei das Basismodul (1) eine Hausautomationssystemschnittstelle umfasst.

10. Modulare Steuervorrichtung (10) nach Anspruch 9, die Hausautomationssystemschnittstelle (1) umfassend mindestens eine Aussparung (12) und das mindestens eine Funktionserweiterungsmodul (3) umfassend mindestens einen Vorsprung (11), der zu der mindestens einen Aussparung (13) in der Hausautomationssystemschnittstelle (1) mechanisch passt.

11. Modulare Steuervorrichtung (10) nach Anspruch 9, die Hausautomationssystemschnittstelle (1) umfassend mindestens einen Vorsprung (15) und das mindestens eine Funktionserweiterungsmodul (3) umfassend mindestens eine Aussparung (13) zum Aufnehmen des mindestens einen Vorsprungs (15) der Hausautomationssystemschnittstelle (1).

12. Modulare Steuervorrichtung (10) nach Anspruch 11, wobei der mindestens eine Vorsprung (15) in der Hausautomationssystemschnittstelle (1) derart verborgen ist, dass, wenn das mindestens eine Funktionserweiterungsmodul (3) an der Hausautomationssystemschnittstelle (1) abnehmbar befestigt wird, das mindestens eine Funktionserweiterungsmodul (3) mindestens teilweise in der Hausautomationssystemschnittstelle (1) versenkt ist.

13. Modulare Steuervorrichtung (10) nach Anspruch 9, wobei eine Brettschaltung (16) in mindestens einem Teil der Hausautomationssystemschnittstelle (1) ausgebildet ist, die Brettschaltung (16) umfassend Perforierungen, in die kleine Vorsprünge (11) auf dem mindestens einen Funktionserweiterungsmodul (3) passen.

14. Modulare Steuervorrichtung (10) nach einem der vorstehenden Ansprüche, wobei das mindestens eine Funktionserweiterungsmodul (3) mindestens eines von einem Schalter, einem Sensormodul, einem USB-Hub, einem USB-Ladegerät, einer USB-Powerbank, einem WLAN-Repeater, einem Intercom-Modul, einem Babyphon oder dergleichen umfasst.

15. Modulare Steuervorrichtung (10) nach einem der Ansprüche 2 bis 14, wobei die elektrische oder elektronische Vorrichtung, die durch die modulare Steuervorrichtung (10) aktiviert oder gesteuert werden soll, eine Beleuchtungsvorrichtung, ein HLK-System, Jalousien oder dergleichen ist.

16. Modulare Steuervorrichtung (10) nach einem der vorstehenden Ansprüche, wobei das Basismodul (1) ein Schalter, ein Smart-Schalter, eine Anzeige oder dergleichen ist.

## Revendications

1. Dispositif de commande modulaire (10) comprenant :
- un module de base (1) conçu pour être monté sur un mur ou un plafond,
- au moins un module d'extension fonctionnelle (3) conçu pour être connecté de manière amovible au module de base (1) par l'intermédiaire d'une interface de connexion (4) pour ajouter une fonctionnalité au dispositif de commande modulaire (10), et
- des moyens pour envoyer des informations à un dispositif distant,
**caractérisé en ce que**
- le module de base (1) comprend une boîte de montage (2) destinée à être montée dans un mur, dans lequel une identification de dispositif du module de base (1) est située dans la boîte de montage (2) et dans lequel l'identification de dispositif est conçue pour accoupler le dispositif de commande modulaire (10) à un emplacement particulier, et
- l'interface de connexion (4) est conçue pour permettre à un courant d'être fourni depuis le module de base (1) à
l'au moins un module d'extension fonctionnelle (3) et permet d'échanger des données entre le module de base (1) et l'au moins un module d'extension fonctionnelle (3), pour relier automatiquement le module d'extension fonctionnelle (3) à cet emplacement spécifique du dispositif de commande modulaire (10).

2. Dispositif de commande modulaire (10) selon la revendication 1, dans lequel les moyens pour envoyer des informations sont en outre conçus pour envoyer des informations provenant de l'au moins un module d'extension fonctionnelle (3) à au moins un dispositif électrique ou électronique de manière à activer et/ou commander l'au moins un dispositif électrique ou électronique.

3. Dispositif de commande modulaire (10) selon l'une quelconque des revendications précédentes, dans lequel le dispositif de commande modulaire (10) est un dispositif autonome.

4. Dispositif de commande modulaire (10) selon la revendication 3, dans lequel l'interface de connexion (4) comprend une carte d'extension avec au moins deux parties de carte d'extension (4a, 4b, 4c).

5. Dispositif de commande modulaire (10) selon la revendication 4, la carte de connexion (4) comprenant une pluralité de parties de carte d'extension (4a, 4b, 4c), dans lequel la pluralité de parties de carte d'extension (4a, 4b, 4c) sont interconnectées mécaniquement et électriquement.

6. Dispositif de commande modulaire (10) selon la revendication 4 ou 5, comprenant en outre une plaque de couverture (6) conçue pour être connectée de manière amovible à la carte d'extension (4) et pour porter le module de base (1) et l'au moins un module d'extension fonctionnelle (3).

7. Dispositif de commande modulaire (10) selon la revendication 6, dans lequel l'au moins un module d'extension fonctionnelle (3) est conçu pour être connecté de manière amovible à la plaque de couverture (6).

8. Dispositif de commande modulaire (10) selon l'une quelconque des revendications 1 ou 2, dans lequel le dispositif de commande modulaire (10) fait partie d'un système domotique.

9. Dispositif de commande modulaire (10) selon la revendication 8, dans lequel le module de base (1) comprend une interface de système domotique.

10. Dispositif de commande modulaire (10) selon la revendication 9, l'interface de système domotique (1) comprenant au moins un évidement (12) et l'au moins un module d'extension fonctionnelle (3) comprenant au moins une saillie (11) ajustant mécaniquement l'au moins un évidement (13) dans l'interface de système domotique (1).

11. Dispositif de commande modulaire (10) selon la revendication 9, l'interface de système domotique (1) comprenant au moins une saillie (15) et l'au moins un module d'extension fonctionnelle (3) comprenant au moins un évidement (13) pour recevoir l'au moins une saillie (15) de l'interface de système domotique (1).

12. Dispositif de commande modulaire (10) selon la revendication 11, dans lequel l'au moins une saillie (15) est cachée dans l'interface de système domotique (1) de telle sorte que, lors de la fixation amovible de l'au moins un module d'extension fonctionnelle (3) à l'interface de système domotique (1), l'au moins un module d'extension fonctionnelle (3) est au moins partiellement enfoncé dans l'interface de système domotique (1).

13. Dispositif de commande modulaire (10) selon la revendication 9, dans lequel une maquette (16) est formée dans au moins une partie de l'interface domotique (1), la maquette (16) comprenant des perforations dans lesquelles des petites saillies (11) sur l'au moins un module d'extension fonctionnelle (3) s'ajustent.

14. Dispositif de commande modulaire (10) selon l'une quelconque des revendications précédentes, dans lequel l'au moins un module d'extension fonctionnelle (3) comprend au moins l'un d'un commutateur, d'un module de capteur, d'un concentrateur USB, d'un chargeur USB, d'une batterie externe USB, d'un répéteur Wi-Fi, d'un module d'interphone, d'un module d'écoute-bébé ou similaires.

15. Dispositif de commande modulaire (10) selon l'une quelconque des revendications 2 à 14, dans lequel le dispositif électrique ou électronique à activer ou à commander par le dispositif de commande modulaire (10) est un dispositif d'éclairage, un système HVAC, des volets ou similaires.

16. Dispositif de commande modulaire (10) selon l'une quelconque des revendications précédentes, dans lequel le module de base (1) est un commutateur, un commutateur intelligent, un afficheur, ou similaires.
